# EUROPÄISCHE PATENTSCHRIFT

(11) **EP 2 338 214 B1**
(45) Veröffentlichungstag und Bekanntmachung des Hinweises auf die Patenterteilung: **26.11.2014**
(21) Anmeldenummer: 08802108.4
(22) Anmeldetag: 05.09.2008
(51) Int. Cl.: H02H 7/125, H02J 3/36, H02M 7/49, H02M 7/797, H02M 7/483, H02M 1/32

(54) **VORRICHTUNG MIT EINEM UMRICHTER**
DEVICE HAVING AN INVERTER
DISPOSITIF PRÉSENTANT UN INVERSEUR

(43) Veröffentlichungstag der Anmeldung: 29.06.2011
(73) Patentinhaber: Siemens Aktiengesellschaft, 80333 München (DE)
(72) Erfinder: DOMMASCHK, Mike, 91096 Möhrendorf (DE); DORN, Jörg, 96155 Buttenheim (DE); EULER, Ingo, 91056 Erlangen (DE); KARLECIK-MAIER, Franz, 91315 Höchstadt (DE); LANG, Jörg, 95346 Stadtsteinach (DE); TU, Quoc-Buu, 90574 Rosstal (DE); WITTSTOCK, Carsten, 90480 Nürnberg (DE); WÜRFLINGER, Klaus, 90419 Nürnberg (DE)
(86) Internationale Anmeldenummer: PCT/EP2008/007555
(87) Internationale Veröffentlichungsnummer: WO 2010/025758

(56) Entgegenhaltungen:
- EP-A- 0 867 998
- BARAN M E ET AL: "Overcurrent Protection in DC Zonal Shipboard Power Systems using Solid State Protection Devices" ELECTRIC SHIP TECHNOLOGIES SYMPOSIUM, 2007. ESTS '07. IEEE, IEEE, PI, 1. Mai 2007 (2007-05-01), Seiten 221-224, XP031177068 ISBN: 978-1-4244-0946-4
- MOHAN,UNDELAND,ROBBINS: "Power Electronics - Converters, Applications and Design" 2003, JOHN WILEY & SONS, INC. , U.S.A. , XP002531542 Seiten 671-675
- KRSTIC S ET AL: "Circuit Breaker Technologies for Advanced Ship Power Systems" ELECTRIC SHIP TECHNOLOGIES SYMPOSIUM, 2007. ESTS '07. IEEE, IEEE, PI, 1. Mai 2007 (2007-05-01), Seiten 201-208, XP031177065 ISBN: 978-1-4244-0946-4
- PAULI B ET AL: "DEVELOPMENT OF A HIGH CURRENT HVDC CIRCUIT BREAKER WITH FAST FAULT CLEARING CAPABILITY" IEEE TRANSACTIONS ON POWER DELIVERY, IEEE SERVICE CENTER, NEW YORK, NY, US, Bd. 3, Nr. 4, 1. Oktober 1988 (1988-10-01), Seiten 2072-2080, XP000001570 ISSN: 0885-8977
- CHARLES W BRICE ET AL: "Review of Technologies for Current-Limiting Low-Voltage Circuit Breakers" IEEE TRANSACTIONS ON INDUSTRY APPLICATIONS, IEEE SERVICE CENTER, PISCATAWAY, NJ, US, Bd. 32, Nr. 5, 1. Oktober 1996 (1996-10-01), XP011022063 ISSN: 0093-9994

## Beschreibung

Die Erfindung betrifft eine Vorrichtung mit
- einem Umrichter, der über eine Kurzschluss-Schutzeinrichtung mit einem Gleichspannungskreis verbunden ist,
- die zumindest teilweise in dem Gleichspannungskreis angeordnet und zum Unterdrücken eines über den Umrichter fließenden Kurzschlussstromes im Gleichspannungskreis eingerichtet ist und
- einen oder mehrere ansteuerbare Leistungshalbleiter aufweist,
- wobei parallel zu wenigstens einem der ansteuerbaren Leistungshalbleiter ein Schutzelement angeordnet ist, das ein Energiespeicher ist.

Eine solche Vorrichtung ist aus dem Beitrag von Baran, M. E. et al., "Overcurrent Protection in DC Zonal Shipboard Power Systems using Solid State Protection Devices", Electric Ship Technologies, Symposium 2007, ESTS 2007, IEEE, IEEE, Pl, 1. Mail 2007, Seiten 221 bis 224, XP031177068, ISBN: 978-1-4244-0946 bereits bekannt. Dort ist eine Vorrichtung offenbart, die einen Umrichter sowie eine Kurzschlussschutzeinrichtung umfasst. Der Umrichter weist eine Brückenschaltung aus Leistungshalbleiterschaltern auf, und verfügt über zwei Gleichspannungs- sowie einen dreiphasigen Wechselspannungsanschluss. Einer der Gleichspannungsanschlüsse ist mit der Kurzschlussschutzeinrichtung verbunden, die ihrerseits einen Leistungshalbleiterschalter aufweist. Dem Leistungshalbleiterschalter der Kurzschlussschutzeinrichtung ist ein RC-Snubber parallel geschaltet, wobei der RC-Snubber neben einer Spule einen Kondensator umfasst. Dem Leistungshalbleiterschalter sowie dem RC-Snubber ist zur Spannungsbegrenzung ein Überspannungsableiter parallel geschaltet.

Kapazitive Snubber sind beispielsweise aus dem Beitrag von Mohan, Undeland und Robbins, Power Electronics - Converters Application and Designs, 2003 John Wiley & Sons Inc., USA, XP002531542 bekannt.

Der Beitrag von KRSTIC, S. et al., "Circuit Breaker Technologies for Advanced Ship Power Systems", Electric Ship Technologies Symposium 2007, ESTS 2007, IEEE, IEEE, Pl, 1. Mail 2007, Seiten 201-208, XP031177065, ISBN: 978-1-4244-0946-4 offenbart mehrere Gleichspannungsschalter für ein so genanntes Schiffsverteilungsnetz. Insbesondere sind Schalter beschrieben, die ein- und abschaltbare Leistungshalbleiterschalter, wie IGBTs, aufweisen, wobei zwei IGBTs in Reihe in einen Pol des Gleichspannungsnetzes geschaltet werden. Die IGBTs weisen zueinander eine entgegen gesetzte Durchlassrichtung auf, wobei jedem IGBT eine Freilaufdiode gegensinnig parallel geschaltet ist. Zum Abbau einer beim Schalten freiwerdenden Energie ist in Parallelschaltung zu den besagten IGBTs wieder ein Snubber vorgesehen sowie ein hierzu paralleler Überspannungsableiter.

Aus dem Beitrag von Pauli, B. et al. "Development of a highcurrent HVDC Circuit Breaker with Fast Fault Clearing Capability", IEEE Transactions on Power Delivery, IEEE Service Center New York, NY, US, Bd. 3, Nr. 4, 1. Oktober 1988, Seiten 2072-2080, XP00001570, ISSN: 0885-8977 ist ein Gleichspannungsschalter bekannt, bei dem einem mechanischen Schalter eine Reihenschaltung parallel geschaltet ist, die au seiner Spule sowie einem Kondensator besteht. Dieser RC-Reihenschaltung sowie dem Schalter ist ein Überspannungsableiter parallel geschaltet. Aufgrund des besagten RC-Kreises wird durch das Öffnen des Schalters dem über den Schalter fließenden Strom eine Schwingung aufgeprägt, die zu einem temporären Stromnulldurchgang führt, so dass ein beim Trennen der Kontakte des mechanischen Schalters gezogene Lichtbogen gelöscht werden kann.

Weitere Gleichspannungsschalter mit einem mechanischen Schalter, einem parallel hierzu angeordneten Leistungshalbleiterschalter, Snubberschaltkreisen und einem Ableiter sind aus dem Beitrag von Charles, W. B. et al, "Review of Technologies for Current Limiting Low-voltage Circuit Breaker", IEEE Transactions on Industry Applications, IEEE Service Center, Piscataway, NY, US, Bd. 32, Nr. 5, 1. Oktober 1996, XP011022063, ISSN: 00939994 bereits bekannt.

Aus der DE 698 37 414 T2 ist eine Vorrichtung mit einem selbstgeführten Umrichter (sogenannter Voltage Source Converter) bekannt, welcher zwischen ein Wechselspannungsnetz und ein Gleichspannungsnetz geschaltet und zur Übertragung elektrischer Leistung zwischen dem Gleichspannungsnetz und dem Wechselspannungsnetz eingerichtet ist. Hierzu wandelt der Umrichter Gleichspannung in Wechselspannung um oder umgekehrt. Die Vorrichtung umfasst zusätzlich eine Kurzschluss-Schutzeinrichtung, welche in dem Gleichspannungsnetz angeordnet ist und mehrere in Reihe geschaltete ansteuerbare Leistungshalbleiter aufweist, wobei parallel zu jedem der ansteuerbaren Leistungshalbleiter jeweils ein Überspannungsableiter angeordnet ist.

Damit ein im Gleichspannungsnetz auftretender Kurzschluss keine Bauteile des Umrichters zerstört, begrenzt die Kurzschluss-Schutzeinrichtung den Strom im Gleichspannungskreis auf eine annehmbare Höhe. Hierzu wird mindestens einer der ansteuerbaren Leistungshalbleiter in seine Sperrstellung überführt. Am sperrenden Leistungshalbleiter kommt es dann schnell zu einem Spannungsanstieg. Als Schutzelement ist parallel zu dem sperrenden Leistungshalbleiter ein Überspannungsleiter vorgesehen, der ab einem Spannungsschwellenwert niederohmig reagiert. Indem der Kurzschluss-Strom über den dann niederohmigen Überspannungsableiter geführt wird, kommt es zu einer den Umrichter schützenden Strombegrenzung im Gleichspannungskreis.

Da die Höhe des Kurzschlussstromes nicht vorhersehbar ist, ist im Rahmen dieses Standes der Technik die Anzahl der anzusteuernden Leistungshalbleiter und gegebenenfalls auch deren Ansteuerfrequenz an die jeweiligen Umstände anzupassen. Der relative Regelaufwand zum Ansteuern dieser Vorrichtung birgt die Gefahr, dass nicht ausreichend schnell plötzlich auftretende Kurzschlussströme hinreichend begrenzt werden. Dies kann eine Zerstörung von Umrichterbauteilen zur Folge haben.

Aufgabe der Erfindung ist es daher, eine Vorrichtung der eingangs genannten Art bereitzustellen, welche die negativen Auswirkungen eines im Gleichspannungsnetz auftretenden Kurzschlusses zuverlässig verhindert.

Die Erfindung löst diese Aufgabe dadurch, dass der Umrichter Leistungshalbleiterventile umfasst, die jeweils eine Reihenschaltung von Submodulen aufweisen und die Kurzschluss-Schutzeinrichtung eine Reihenschaltung von Submodulen umfasst, wobei die Submodule der Kurzschlusseinrichtung und die Submodule des Umrichters gleich aufgebaut sind und das Submodul zwei in Reihe geschaltete gleichsinnig angeordnete ansteuerbare Leistungshalbleiter aufweist, die von einem gemeinsamen Kondensator überbrückt sind.

Erfindungsgemäß dient das Schutzelement dem sicheren Unterbrechen des Kurzschluss-Stromes, indem es ein Energiespeicher ist. Im Gegensatz hierzu dient das Schutzelement gemäß dem Stand der Technik dem Begrenzen des Kurzschluss-Stromes, indem es ein Überspannungsableiter ist. Dies führt dazu, dass die erfindungsgemäße Kurzschluss-Schutzeinrichtung einen Kurzschluss-Strom sicher und schnell unterbricht, ohne dass die Gefahr besteht einen der sperrenden Leistungshalbleiter der Kurzschluss-Schutzeinrichtung zu zerstören. Im Gegensatz hierzu wird gemäß dem Stand der Technik der Kurzschluss-Strom mittels der bekannten Kurzschluss-Schutzeinrichtung stufenweise begrenzt, so dass während der Strombegrenzung die Gefahr einer Zerstörung von Umrichter-Bauteilen gegeben ist.

Erfindungsgemäß ist vorgesehen, dass der Umrichter Leistungshalbleiterventile umfasst, die jeweils eine Reihenschaltung von Submodulen aufweisen und die Kurzschluss-Schutzeinrichtung eine Reihenschaltung von Submodulen umfasst, wobei die Submodule der Kurzschlusseinrichtung und die Submodule des Umrichters gleich aufgebaut sind.

Das Verwenden von Standardbauteilen reduziert die Anschaffungskosten der erfindungsgemäßen Vorrichtung.

Weiterhin weist das Submodul zwei in Reihe geschaltete gleichsinnig angeordnete ansteuerbare Leistungshalbleiter auf, welche von einem gemeinsamen Kondensator überbrückt sind.

Die Anzahl der einen oder mehreren, gegebenenfalls in Reihe geschalteten ansteuerbaren Leistungshalbleiter der erfindungsgemäßen Kurzschluss-Schutzeinrichtung ist so gewählt, dass an keinem der gleichzeitig gesperrten Leistungshalbleiter bei auftretenden Kurzschlussspannungen eine die Spannungsfestigkeit des Leistungshalbleiters überschreitende Spannung abfällt. Mit anderen Worten sind der eine oder die mehreren ansteuerbaren Leistungshalbleiter der Kurzschluss-Schutzeinrichtung dazu eingerichtet, eine maximal auftretende Kurzschlussspannung zu sperren. Der zu wenigstens einem der ansteuerbaren Leistungshalbleiter parallel geschaltete Energiespeicher dient dazu, dass geringe zeitliche Differenzen bei der Ansteuerung der Leistungshalbleiter und damit geringe Differenzen im Abschalten der Leistungshalbleiter zu keiner für die Leistungshalbleiter schädlichen Fehlverteilung der über den Bauteilen abfallenden Spannung führt.

Die Vorrichtung mit einem Umrichter ist beispielsweise Teil einer Hochspannungs-Gleichstrom-Übertragungsanlage (HGÜ-Anlage). Derartige HGÜ-Anlagen können elektrische Energie, welche in Form von Wechselspannung bereitgestellt wird, durch Transformieren der Wechselspannung in Gleichspannung in einem Umrichter, über lange Distanzen über ein Gleichspannungsnetz transportieren, wobei die elektrische Energie am Ankunftsort über einen weiteren Umrichter zurück in Wechselspannung transformiert wird. Die beiden Umrichter weisen hierbei einen identischen Aufbau auf und jeder dieser Umrichter kann erfindungsgemäß über mindestens eine Kurzschluss-Schutzeinrichtung vor im Gleichspannungsnetz auftretenden Kurschlüssen gesichert werden. Bei der Vorrichtung mit einem Umrichter könnte es sich aber auch um einen Teil der elektrischen Antriebsvorrichtung eines Schienenfahrzeugs handeln. Die erfindungsgemäße Vorrichtung ist natürlich nicht auf die genannten Ausführungsbeispiele beschränkt.

Wie bereits dargestellt wurde, dient der Umrichter zum Umrichten von Wechselspannung in Gleichspannung und umgekehrt. Der Aufbau derartiger Umrichter ist bekannt. Beispielsweise kann es sich um einen so genannten selbstgeführten Umrichter mit Gleichspannungszwischenkreis in Zweipunkt- oder Dreipunkttechnik oder um einen selbstgeführten Umrichter mit Gleichspannungszwischenkreis und Multileveltopologie handeln (sogenannter modularer Multilevel Voltage Source Converter). Der Aufbau derartiger Umrichter ist bekannt und umfasst Reihenschaltungen von Submodulen, welche einen oder mehrere ansteuerbare Leistungshalbleiter mit jeweils einer dazu gegensinnig angeordneten Freilaufdiode umfassen. Beim Auftreten eines Kurzschlusses im Gleichspannungsnetz entsteht ein vom Wechselspannungsnetz getriebener Strom über die Freilaufdioden im Umrichter hin zu der den Kurzschluss verursachenden Fehlerstelle. Hierbei werden die den Kurzschlussstrom leitenden Freilaufdioden zerstört. Um dies zu verhindern, ist erfindungsgemäß die den Kurzschlussstrom unterbrechende Kurzschluss-Schutzeinrichtung im Gleichspannungszwischenkreis angeordnet. Mit Hilfe eines konventionellen, mechanisch schaltenden Leistungsschalters wäre eine vergleichbar schnelle Unterbrechung des Kurzschlussstroms hingegen nicht möglich.

Es kann vorteilhaft vorgesehen sein, dass der Energiespeicher ein Kondensator ist.

Der zu dem ansteuerbaren Leistungshalbleiter parallel geschaltete Kondensator ist hierbei so ausgelegt, dass ein Sperren des Leistungshalbleiters nicht zu einem sprunghaften Anstieg der über den Leistungshalbleiter abfallenden Spannung und somit bei geringen zeitlichen Differenzen zwischen dem Sperren der Leistungshalbleiter zu keiner für diese schädlichen Fehlverteilung der Spannung über der Serienschaltung kommt.

Es kann auch als vorteilhaft angesehen werden, dass gegensinnig parallel zu jedem ansteuerbaren Leistungshalbleiter jeweils eine Diode geschaltet ist.

Diese so genannte Freilaufdiode dient zusätzlich zum Schutz vor Überspannungen beim Sperren des ansteuerbaren Leistungshalbleiters. Die Überspannungen entstehen durch Induktivitäten im abzuschaltenden Kurzschlussstromkreis. Durch die Freilaufdiode werden derartige Spannungsspitzen vermieden.

Es kann auch als vorteilhaft angesehen werden, dass mindestens zwei in einer Reihenschaltung aufeinanderfolgende ansteuerbare Leistungshalbleiter entgegengesetzt angeordnet und von einem gemeinsamen Kondensator überbrückt sind.

Gemäß diesem Ausführungsbeispiel unterbricht die Kurzschluss-Schutzeinrichtung einen Kurzschlussstrom unabhängig von seiner Stromrichtung. Dies ermöglicht den Einsatz der erfindungsgemäßen Vorrichtung in Anlagen, in welchen der Strom im Gleichspannungszwischenkreis in beiden Richtungen fließen kann.

Gemäß einer weiteren vorteilhaften Ausgestaltung der Erfindung weist die Vorrichtung eine Detektionseinrichtung zum Erfassen eines Kurzschlussstromes und eine Steuervorrichtung zum Steuern wenigstens eines der Leistungshalbleiter der Kurzschluss-Schutzeinrichtung auf, wobei die Detektionseinrichtung über eine Kommunikationsleitung mit der Steuereinrichtung verbunden ist.

Eine weitere vorteilhafte Ausgestaltung der Erfindung sieht vor, dass der ansteuerbare Leistungshalbleiter ein Bipolartransistor mit isolierter Gate-Elektrode (IGBT) ist.

Es kann auch als vorteilhaft angesehen werden, dass der ansteuerbare Leistungshalbleiter ein Thyristor ist.

Weitere Vorteile und Ausgestaltungen der Erfindung sind Gegenstand der Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: einen Kurzschlussstrompfad in einem selbstgeführten Umrichter (VSC) in Zweipunkttechnik in schematischer Darstellung,
- Figur 2: einen Kurzschlussstrompfad in einem selbstgeführten Umrichter (VSC) mit sogenannter Multileveltopologie in schematischer Darstellung,
- Figur 3: ein erstes Ausführungsbeispiel der erfindungsgemäßen Vorrichtung in schematischer Darstellung,
- Figur 4: einen Ausschnitt eines zweiten Ausführungsbeispiels der erfindungsgemäßen Kurzschluss-Schutzeinrichtung in schematischer Darstellung,
- Figur 5: einen Ausschnitt eines dritten Ausführungsbeispiels der erfindungsgemäßen Kurzschluss-Schutzeinrichtung in schematischer Darstellung und
- Figur 6: einen Ausschnitt eines vierten Ausführungsbeispiels der erfindungsgemäßen Kurzschluss-Schutzeinrichtung in schematischer Darstellung zeigt.

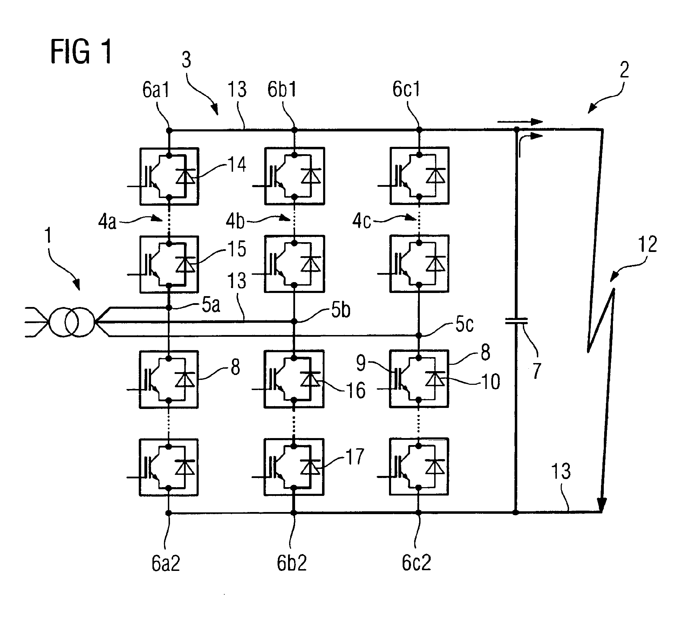

Die Figur 1 zeigt einen selbstgeführten Umrichter 3 (VSC) in Zweipunkttechnik, der zur Leistungsübertragung zwischen einem Wechselspannungsnetz 1 und einem Gleichspannungsnetz 2 eingerichtet ist. Hierzu ist das drei Phasen aufweisende Wechselspannungsnetz 1 mit jeweils einem Wechselspannungsanschluss 5a, 5b, 5c an einen von drei Phasenmodul-Zweigen 4a, 4b, 4c des Umrichters 3 angeschlossen. Jeder der drei Phasenmodulzweige 4a, 4b, 4c weist zwei Gleichspannungsanschlüsse 6a1, 6a2, 6b1, 6b2, 6c1, 6c2 auf zum Anschluss an das Gleichspannungsnetz 2. Die Phasenmodulzweige 4a, 4b, 4c weisen eine Reihenschaltung von Submodulen 8 auf, von denen jeweils zwei je Ventil-Zweig in der Figur 1 dargestellt sind. Die Anzahl der Submodule ist jedoch im Rahmen der Erfindung beliebig und kann auch größer als 100 sein. Jedes Submodul 8 ist durch eine Parallelschaltung eines ansteuerbaren Leistungshalbleiters 9 und einer gegensinnig gerichteten Freilaufdiode 10 realisiert. Parallel zu den drei Phasenmodulzweigen 4a, 4b, 4c ist ein Zwischenkreiskondensator 7 des Umrichters 3 geschaltet.

Im Falle eines durch die Position 12 verdeutlichten Kurzschlusses im Gleichspannungskreis entsteht u.a. ein vom Wechselspannungsnetz 2 gespeister Kurzschlussstrom entlang eines Kurzschluss-Strompfades 13. Dieser Kurzschluss-Strompfad 13 ist beispielhaft aus einer Vielzahl an möglichen Kurzschluss-Strompfaden ausgewählt. Die auf dem Kurzschluss-Strompfad 13 liegenden Freilaufdioden 14, 15, 16, 17 sowie der Zwischenkreiskondensator 7 werden aufgrund des hohen Stromes entlang des Kurzschluss-Strompfades 13 bereits nach kurzer Zeit zerstört oder beschädigt.

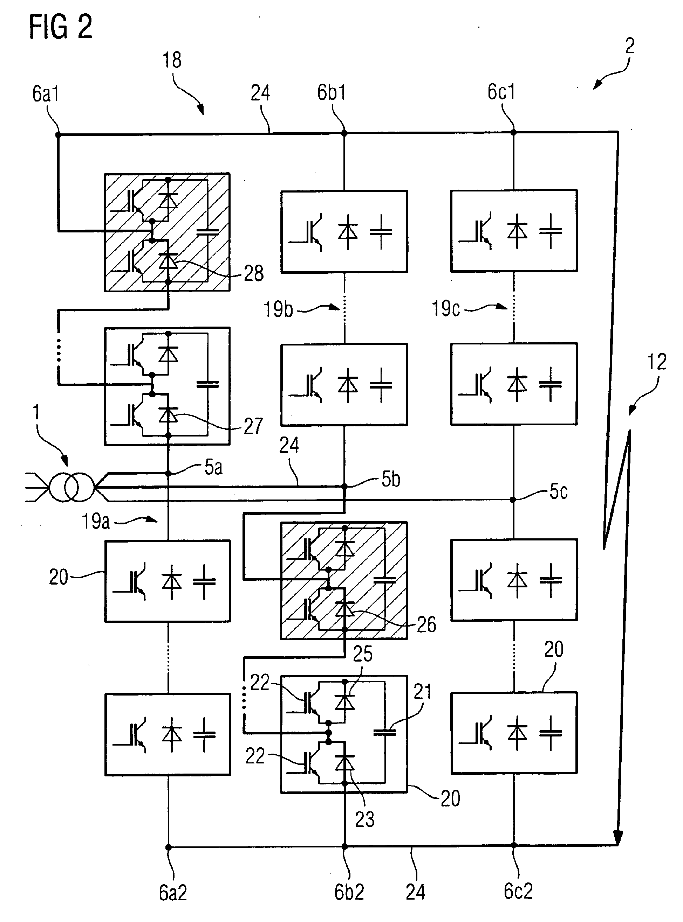

Figur 2 zeigt einen Kurzschlussstrompfad in einem selbstgeführten Umrichter 18 (VSC), wobei der Umrichter 18 im Gegensatz zu Figur 1 in sogenannter Multileveltopologie aufgebaut ist. Die Phasenmodul-Zweige 19a, 19b, 19c sind wieder jeweils über einen Wechselspannungsanschluss 5a, 5b, 5c an eine Phase eines Wechselspannungsnetzes 1 und über zwei Gleichspannungsanschlüsse 6a1, 6a2, 6b1, 6b2, 6c1, 6c2 an ein Gleichspannungsnetz 2 angeschlossen. Mit Bezug zu dem Umrichter 3 der Figur 1 weisen die in Reihe geschalteten Submodule 20 der Phasenmodulzweige 19a, 19b, 19c jedoch einen abweichenden Aufbau auf. Insbesondere ist die Kapazität des zentralen Kondensators gemäß Figur 1 in dem in Figur 2 gezeigten Ausführungsbeispiels auf die Vielzahl der Submodule verteilt. So weist jedes der Submodule einen eigenen Kondensator auf. Ferner ist jedem Kondensator 21 eine Reihenschaltung aus zwei gleichsinnig angeordneten ansteuerbaren Leistungshalbleitern 22 parallel geschaltet, zu denen jeweils eine Freilaufdiode 23, 25 gegensinnig parallel angeordnet ist.

Im Falle eines im Gleichspannungsnetz 2 auftretenden Kurzschlusses 12 entsteht wieder ein vom Wechselspannungsnetz 2 gespeister Kurzschlussstrom u.a. entlang des Kurzschluss-Strompfades 24. Auch dieser Kurzschluss-Strompfad 24 ist beispielhaft aus einer Vielzahl an möglichen Kurzschluss-Strompfaden ausgewählt. Die auf dem Kurzschluss-Strompfad 24 liegenden Freilaufdioden 23, 26, 27, 28 werden aufgrund des hohen Stromes entlang des Kurzschluss-Strompfades 24 in kurzer Zeit zerstört oder beschädigt.

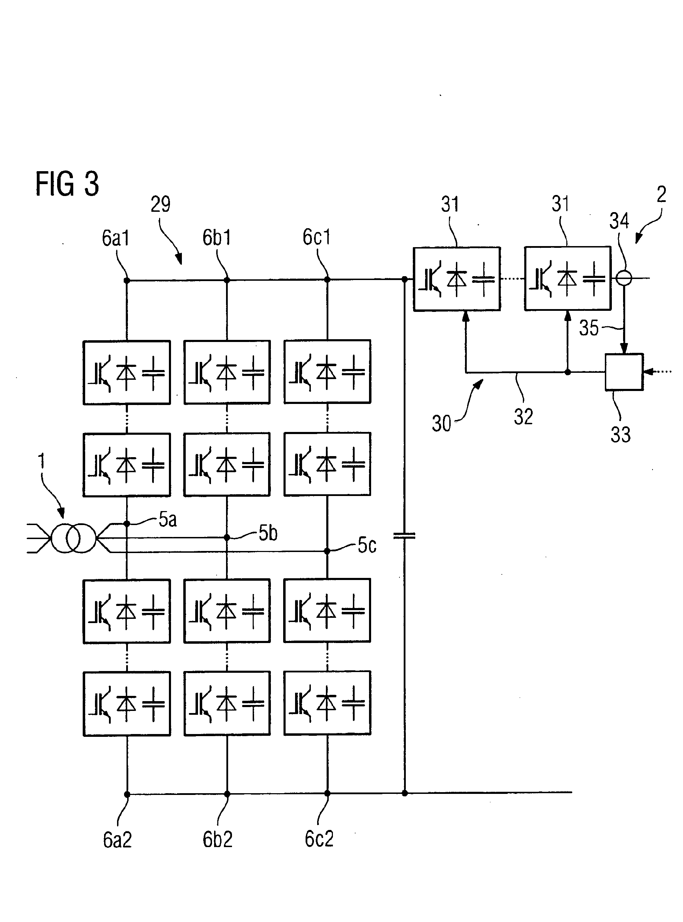

Die Figur 3 zeigt ein erstes Ausführungsbeispiel der erfindungsgemäßen Vorrichtung mit einem Umrichter 29, welcher mit Wechselspannungsanschlüssen 5a, 5b, 5c an ein Wechselspannungsnetz 1 und mit Gleichspannungsanschlüssen 6a1, 6a2, 6b1, 6b2, 6c1, 6c2 an ein Gleichspannungskreis 2 angeschlossen ist. Der Umrichter 29 ist einen selbstgeführter Umrichter (VSC) mit einer Multileveltopologie und umfasst eine Reihenschaltung von bipolaren Submodulen, die jeweils einen zugeordneten Energiespeicher beispielsweise in Form eines Kondensators aufweisen. Dem Energiespeicher ist eine Leistungshalbleiterschaltung parallel geschaltet, mit der die an dem Energiespeicher abfallende Spannung oder eine Nullspannung an dem Anschluss des Submoduls erzeugbar ist. Im Rahmen der Erfindung ist die Topologie des Umrichters jedoch grundsätzlich beliebig, so dass auch zwei-, drei- oder fünfstufige VSCs möglich sind. In Figur 3 ist zwischen den Polen des Gleichspannungszwischenkreises ein Kondensator gezeigt, wie er typischerweise nur bei zweistufigen VSCs auftritt. Dies soll die grundsätzlich beliebige Umrichtertopologie andeuten. In dem Gleichspannungskreis 2 ist eine Kurzschluss-Schutzeinrichtung 30 angeordnet mit einer in dem Gleichspannungskreis 2 angeordneten Reihenschaltung von Submodulen 31, die mindestens einen ansteuerbaren Leistungshalbleiter und hierzu parallel geschaltet einen Kondensator umfassen. Die ansteuerbaren Leistungshalbleiter der Submodule 31 sind über eine Steuerleitung 32 mit einer Steuervorrichtung 33 verbunden. Zusätzlich zu den Submodulen 31 ist eine Detektionseinrichtung 34 in dem Gleichspannungsnetz 2 angeordnet, welche über eine Kommunikationsleitung 35 mit der Steuervorrichtung 33 verbunden ist.

Im Falle eines im Gleichspannungskreis 2 auftretenden Kurzschlusses detektiert die Detektionseinrichtung 34 einen Kurzschluss-Strom und sendet an die Steuervorrichtung 33 ein Detektionssignal, woraufhin die Steuervorrichtung 33 die Leistungshalbleiter der Submodule 31 in einen den Strom sperrenden Zustand versetzt. Die Kurzschluss-Schutzeinrichtung 30 führt somit zu einer die Bauteile des Umrichters 29 schützenden Unterbrechung des Kurzschluss-Stromes im Gleichspannungskreis 2.

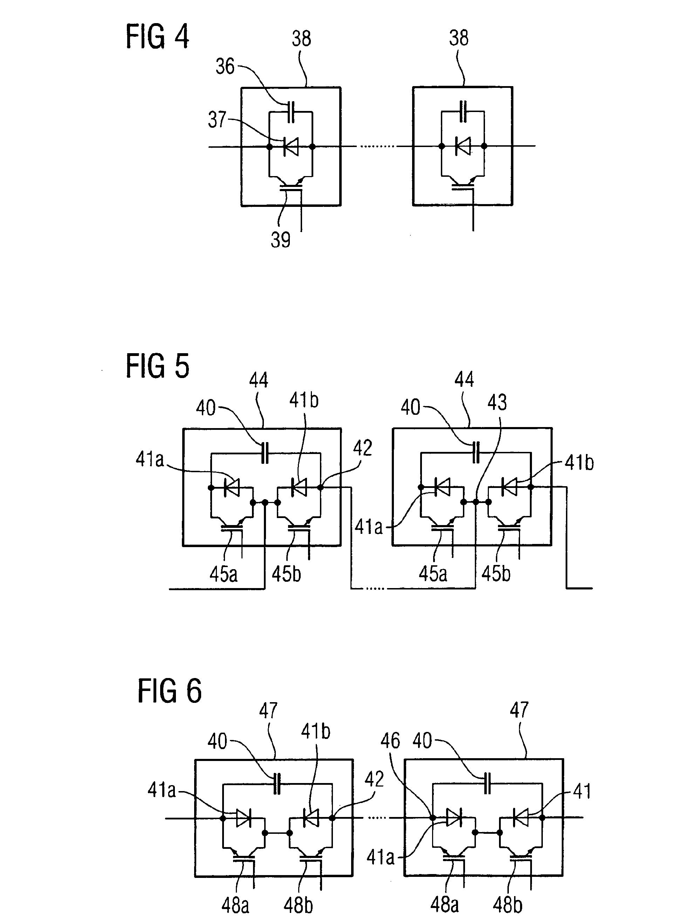

Die Figur 4 verdeutlicht den Aufbau eines Submoduls gemäß einem zweiten Ausführungsbeispiels. Dargestellt sind zwei von mehreren in Reihe geschalteten Submodulen 38 der Kurzschluss-Schutzeinrichtung. Die Submodule 38 weisen einen ansteuerbaren Leistungshalbleiter 39 und parallel hierzu einen Kondensator 36 und eine Freilaufdiode 37 auf, wobei die Freilaufdiode 37 entgegengesetzt parallel zum Leistungshalbleiter 39 geschaltet ist.

Durch gleichzeitiges Ansteuern der Leistungshalbleiter 39 wird ein die Submodule 38 durchfließender Strom in einer Richtung gesperrt. Die Kondensatoren 36 bewirken hierbei, dass geringe zeitliche Differenzen bei der Ansteuerung der Leistungshalbleiter 39 und damit geringe zeitliche Differenzen im Abschalten der Leistungshalbleiter 39 zu keiner für die Leistungshalbleiter 39 schädlichen Fehlverteilung der über die Serienschaltung abfallenden Spannung führt.

Die Figur 5 zeigt eine weitere Ausführungsform 44 der in Figur 4 dargestellten Submodule gemäß einem dritten Ausführungsbeispiels. Die Submodule 44 sind entsprechend der Submodule eines selbstgeführten Umrichters mit Multileveltopologie aufgebaut und umfassen eine Reihenschaltung von zwei ansteuerbaren Leistungshalbleitern 45a, 45b gleicher Sperrrichtung. Den Leistungshalbleitern 45a, 45b ist jeweils eine Freilaufdiode 41a, 41b gegensinnig parallel geschaltet. Parallel zur Reihenschaltung ist ein Kondensator 40 angeordnet. Jedes der bipolaren Submodule 44 ist ausgehend von einer Anschlussklemme 42 mit einer Anschlussklemme 43 eines benachbarten Submoduls 44 verbunden, wobei die Anschlussklemme 43 mit dem Potentialpunkt zwischen den Leistungshalbleitern 45a, 45b des benachbarten Submoduls 44 galvanisch verbunden ist.

Die dargestellte Reihenschaltung der Submodule 44 ermöglicht das Sperren eines Stromes in einer Stromrichtung, die gegensinnig zu den Freilaufdioden 41a, 41b ist.

Die Figur 6 zeigt eine weitere Ausführungsform 47 der in Figur 4 dargestellten Submodule gemäß einem vierten Ausführungsbeispiels. Die Submodule 47 weisen im Gegensatz zu den Submodulen 44 der Figur 5 Leistungshalbleiter 48a, 48b entgegen gesetzter Sperrrichtung auf. Die Submodule sind ausgehend von einer Anschlussklemme 42 mit einer Anschlussklemme 46 eines benachbarten Submoduls 47 verbunden.

Die Reihenschaltung der Submodule 47 ermöglicht das Sperren eines Stromes in beiden Stromrichtungen.

### Bezugszeichenliste

1 Wechselspannungsnetz
2 Gleichspannungsnetz
3 Umrichter
4a, 4b, 4c Phasenmodul-Zweig
5a, 5b, 5c Wechselspannungsanschluss
6a1, 6a2, 6b1, 6b2, 6c1, 6c2 Gleichspannungsanschluss
7 Zwischenkreiskondensator
8 Submodul
9 ansteuerbarer Leistungshalbleiter
10 Freilaufdiode
12 Kurzschluss
13 Kurzschluss-Strompfad
14, 15, 16, 17 Freilaufdiode
18 Umrichter
19a, 19b, 19c Phasenmodul-Zweig
20 Submodul
21 Kondensator
22 ansteuerbarer Leistungshalbleiter
23 Freilaufdiode
24 Kurzschluss-Strompfad
25, 26, 27, 28 Freilaufdiode
29 Umrichter
30 Kurzschluss-Schutzeinrichtung
31 Submodul
32 Steuerleitung
33 Steuervorrichtung
34 Detektionseinrichtung
35 Kommunikationsleitung
36 Kondensator
37 Freilaufdiode
38 Submodul
39 ansteuerbarer Leistungshalbleiter
40 Kondensator
41a, 41b Freilaufdiode
42 Anschlussklemme
43 Anschlussklemme
44 Submodul
45a, 45b ansteuerbarer Leistungshalbleiter
46 Anschlussklemme
47 Submodul
48a, 98b ansteuerbarer Leistungshalbleiter

## Patentansprüche

1. Vorrichtung mit
- einem Umrichter, der über eine Kurzschluss-Schutzeinrichtung mit einem Gleichspannungskreis verbunden ist,
- die zumindest teilweise in dem Gleichspannungskreis angeordnet und zum Unterdrücken eines über den Umrichter fließenden Kurzschlussstromes im Gleichspannungskreis eingerichtet ist und
- einen oder mehrere ansteuerbare Leistungshalbleiter aufweist,
- wobei parallel zu wenigstens einem der ansteuerbaren Leistungshalbleiter ein Schutzelement angeordnet ist, das ein Energiespeicher ist,
wobei der Umrichter Leistungshalbleiterventile umfasst, die jeweils eine Reihenschaltung von Submodulen aufweisen und die Kurzschluss-Schutzeinrichtung eine Reihenschaltung von Submodulen umfasst, wobei die Submodule der Kurzschluss-Schutzeinrichtung und die Submodule des Umrichters gleich aufgebaut sind, **dadurch gekennzeichnet, dass** jedes Submodul zwei in Reihe geschaltete gleichsinnig angeordnete ansteuerbare Leistungshalbleiter aufweist, die von einem gemeinsamen Kondensator überbrückt sind.

2. Vorrichtung nach Anspruch 1,
**dadurch gekennzeichnet**, d a s s
- gegensinnig parallel zu jedem ansteuerbaren Leistungshalbleiter jeweils eine Diode geschaltet ist.

3. Vorrichtung nach einem der vorstehenden Ansprüche,
**dadurch gekennzeichnet, dass**
- mindestens zwei in einer Reihenschaltung aufeinanderfolgende ansteuerbare Leistungshalbleiter entgegengesetzt angeordnet und von einem gemeinsamen Kondensator überbrückt sind.

4. Vorrichtung nach einem der vorstehenden Ansprüche,
**gekennzeichnet =durch**
- eine Detektionseinrichtung zum Erfassen eines Kurzschlussstromes und
- eine Steuervorrichtung zum Steuern wenigstens eines der Leistungshalbleiter der Kurzschluss-Schutzeinrichtung,
- wobei die Detektionseinrichtung über eine Kommunikationsleitung mit der Steuereinrichtung verbunden ist.

5. Vorrichtung nach einem der vorstehenden Ansprüche,
**dadurch gekennzeichnet,** d a s s
der ansteuerbare Leistungshalbleiter ein Bipolartransistor mit isolierter Gate-Elektrode (IGBT) ist.

6. Vorrichtung nach einem der vorstehenden Ansprüche,
**dadurch gekennzeichnet,** d a s s
der ansteuerbare Leistungshalbleiter ein Thyristor ist.

## Claims

1. Apparatus having
- a converter which is connected to a DC voltage circuit via a short-circuit protection device,
- which is arranged at least partially in the DC voltage circuit and is designed to suppress a short-circuit current flowing via the converter in the DC voltage circuit, and
- has one or more controllable power semiconductors,
- wherein a protection element is arranged in parallel with at least one of the controllable power semiconductors, which protection element is an energy store, wherein the converter has power semiconductor valves which each have a series circuit of submodules, and the short-circuit protection device has a series circuit of submodules, wherein the submodules of the short-circuit protection device and the submodules of the converter are of identical design,
**characterized in that**
each submodule has two controllable power semiconductors which are connected in the same sense in series and are bridged by a common capacitor.

2. Apparatus according to claim 1,
**characterized in that**
- a diode is in each case connected back-to-back in parallel with each controllable power semiconductor.

3. Apparatus according to one of the preceding claims,
**characterized in that**
- at least two controllable power semiconductors which follow one another in a series circuit are arranged back-to-back and are bridged by a common capacitor.

4. Apparatus according to one of the preceding claims,
**characterized by**
- a detection device for detection of a short-circuit current, and
- a control apparatus for controlling at least one of the power semiconductors in the short-circuit protection device,
- wherein the detection device is connected to the control device via a communication line.

5. Apparatus according to one of the preceding claims,
**characterized in that**
the controllable power semiconductor is a bipolar transistor with an insulated gate electrode (IGBT).

6. Apparatus according to one of the preceding claims,
**characterized in that**
the controllable power semiconductor is a thyristor.

## Revendications

1. Dispositif comprenant
- un inverseur, qui est relié à un circuit de tension continue par un dispositif de protection vis-à-vis d'un court-circuit,
- qui est monté au moins en partie dans le circuit de tension continue et qui est conçu pour supprimer un courant de court-circuit, passant par l'intermédiaire de l'inverseur, dans le circuit de tension continue et
- un ou plusieurs semi-conducteurs de puissance pouvant être commandés,
- dans lequel, en parallèle à au moins l'un des semi-conducteurs de puissance pouvant être commandés, est monté un élément de protection, qui est un accumulateur d'énergie,
dans lequel l'inverseur comprend des soupapes à semi-conducteurs de puissance, qui ont respectivement un circuit série de sous-modules et le dispositif de protection vis-à-vis d'un court-circuit comprend un circuit série de sous-modules, les sous-modules du circuit de protection vis-à-vis d'un court-circuit et les sous-modules de l'inverseur étant constitués pareillement, **caractérisé en ce que** chaque sous-module a deux semi-conducteurs de puissance pouvant être commandés, disposés dans le même sens, qui sont montés en série et qui sont pontés par un condensateur commun.

2. Dispositif suivant la revendication 1,
**caractérisé en ce que**
- respectivement une diode est montée en sens contraire, parallèlement à chaque semi-conducteur de puissance pouvant être commandé.

3. Dispositif suivant l'une des revendications précédentes,
**caractérisé en ce que**
- au moins deux semi-conducteurs de puissance pouvant être commandés, se succédant dans un circuit en série, sont disposés en opposition et sont pontés par un condensateur commun.

4. Dispositif suivant l'une des revendications précédentes,
**caractérisé par**
- un dispositif de détection pour la détection d'un courant de court-circuit et
- un dispositif de commande pour la commande de l'un au moins des semi-conducteurs de puissance des dispositifs de protection vis-à-vis d'un court-circuit,
- dans lequel le dispositif de détection est relié au dispositif de commande par une ligne de communication.

5. Dispositif suivant l'une des revendications précédentes,
**caractérisé en ce que**
le semi-conducteur de puissance pouvant être commandé est un transistor bipolaire à électrode de grille isolée (IGBT).

6. Dispositif suivant l'une des revendications précédentes,
**caractérisé en ce que**
le semi-conducteur de puissance pouvant être commandé est un thyristor.
